# EUROPEAN PATENT APPLICATION

(11) **EP 4 741 954 A1**
(43) Date of publication of application: **13.05.2026**
(21) Application number: 24212081.4
(22) Date of filing: 11.11.2024
(51) Int. Cl.: G05B 13/02, G05B 19/418, G06N 3/08, G05B 17/00

(54) **COMPUTER-IMPLEMENTED METHOD FOR DETERMINING A COMMON TRAINED MACHINE LEARNING MODEL FOR A FLEET OF POWER PLANTS**

(71) Applicant: Siemens Aktiengesellschaft, 80333 München (DE)
(72) Inventor: Bogdoll, Dieter, 80634 München (DE); Depeweg, Stefan, 13627 Berlin (DE); Schöner, Holger, 81739 München (DE); Sun, Yize, 80809 München (DE); Swazinna, Phillip, 85375 Neufahrn (DE); Tietz, Christoph, 85521 Ottobrunn (DE); Tokic, Michel, 88069 Tettnang (DE); von Beuningen, Anja, 99085 Erfurt (DE)
(74) Representative: Siemens Patent Attorneys

(57) **Abstract**

The invention relates to a computer-implemented method for determining a common trained machine learning model for a fleet of power plants, comprising the steps: a. Providing a plurality of training data sets for a plurality of respective power plants (S1); wherein the plurality of training data sets is combined in a heterogeneous training data set; b. Providing a machine learning model (S2); c. Training the machine learning model on the heterogeneous training data set (S3); and d. Providing the common trained machine learning model (S4). Further, the invention relates to a corresponding computer program product and technical unit.

## Description

### 1. Technical field

The present invention relates to a computer-implemented method for determining a common trained machine learning model for a fleet of power plants. Further, the invention relates to a corresponding computer program product and technical unit.

### 2. Prior art

Machine learning is well known from the prior art in context of Artificial Intelligence. According to which, the Artificial Intelligence systems are software programs whose behavior is learned from data instead of being explicitly programmed. The learning process is called "training" which requires plenty of training data and significant computational resources. Thereby, the trained machine learning model solves a specific task for which it was trained, such as data classification. In other words, regarding classification, the trained machine learning models are configured to classify the data elements.

The trained Machine-Learning-Models are increasingly used and gain in importance in diverse technical fields. For example, they can be used for object detection in autonomous vehicles. Moreover, power plants (e.g. gas turbines) or industrial plants can be nowadays controlled by means of the trained Machine-Learning-Models. This control allows for significantly reduced emissions of the power plants or increased performance of the industrial plants. Known control mechanisms comprise the setting of e.g. the fuel fractions during operation of the power plants in order to optimize the trade-off between NOx emission and acoustic dynamics.

Usually, the Machine-Learning-Models or Artificial Intelligence systems are not learned or optimized on their target technical systems, such as the aforementioned autonomous vehicles, industrial plants or power plants. To the contrary, they are trained on a separate computing unit or simulator due to safety concerns. The Machine-Learning-Model can be configured to model the effect of the control variables (e.g. the fuel fractions) on the emissions of the power plants. After the control strategy is learned on the sperate computing unit or simulator it is then deployed on the target technical system to e.g. reduce the emissions.

According to prior art approaches, usually, the Machine-Learning-Models are trained for each technical system, such as power plants, separately. In other words, one Machine-Learning-Model (or ensemble of those) is trained for each instance within a fleet of similar power plants. For instance, data recording of a particular power plant is stored and then based on this data a Machine-Learning-Model is trained, modelling for example state-transitions, emissions (NOx, CO) and/or dynamic frequency bands (IFD, HFD, LFD). Subsequently, a control strategy is derived utilizing the trained Machine-Learning-Model, such as minimizing emissions and/or frequency dynamics. The disadvantage is that the prior art approaches are time-consuming and cost intensive.

It is therefore an objective of the invention to provide a computer-implemented method for determining a common trained machine learning model for a fleet of power plants, which is more efficient and reliable.

### 3. Summary of the invention

This problem is according to one aspect of the invention solved by a computer-implemented method for determining a common trained machine learning model for a fleet of power plants, comprising the steps:
a. Providing a plurality of training data sets for a plurality of respective power plants; wherein the plurality of training data sets is combined as a heterogeneous training data set;
b. Providing a machine learning model;
c. Training the machine learning model on the heterogeneous training data set; and
d. Providing the common trained machine learning model.

Accordingly, the invention is directed to a computer-implemented method for determining a common trained machine learning model for a fleet of power plants. The machine learning model can be equally referred to as model based on or utilizing machine learning or Machine-Learning-Model. The common trained machine learning model can be understood as one single or one joint machine learning model. This machine learning model is specified, used for training and the generation of the trained machine learning model for the plurality of power plants or whole set of power plants. Preferably, the fleet of power plants is provided in the form of a plurality of different or diverse gas turbines.

The trained common machine learning model can be designed as a simulation model which models for example state-transitions, emissions (e.g. NOx and CO) and/or dynamic frequency bands (e.g. IFD, HFD and LFD). After the control strategy is learned on the simulator it can then be deployed on the target power plant. Alternatively, the machine learning model can be configured for anomaly detection.

Therefore, in the first step training data sets are provided for the power plants in the form of a heterogeneous training data set. In the second step, the machine learning model is provided. Thereby, the heterogeneous training data set and the machine learning model are utilized for training. The input, such as the training data sets or any other input data, can be received and/or transmitted via one or more input interfaces of a technical unit or technical system, wherein the technical unit can be designed as any computing unit. Additionally or alternatively, the output in form of the common trained machine learning model can be sent via one or more output interfaces. This way, data can be efficiently transmitted between computing units reducing data traffic and allowing for bidirectional data exchange. The input data and/or output data can be extended with additional data or information.

The machine learning model is trained on the heterogeneous training data set and provided as output. In other words, one single and joint machine learning model is trained for the whole fleet of power plants.

The advantage of the present invention is that the common trained machine learning model is determined in an efficient and reliable manner for the power plants. This way the prior art training of a single machine learning model per power plant instance is circumvented, which is expensive and time consuming..

In an aspect at least one power plant of the plurality of power plants is a gas turbine, wherein preferably each power plant of the plurality of gas turbines is a gas turbine. Accordingly, the fleet of the power plants is provided as fleet of gas turbines, preferably distinct or diverse gas turbines. The advantage is that the heterogeneity of the training data is improved, because, for example, different ambient conditions (e.g. temperatures, air humidity and air pressure) due to the geographic location can affect combustion dynamics significantly. In this way the heterogeneity makes the model more robust to varying operating and ambient conditions and thus helps to perform better for new power plants.

In a further aspect each training data set of the plurality of training data sets comprises sensor data, wherein the sensor data is determined by means of at least one sensor. Accordingly, the power plants, e.g. the gas turbines, comprise one or more determining units, preferably in the form of sensors. The sensors are configured to measure or collect the sensor data. The power plants can comprise distinct sensors. Each power plant can be comprised of a different set of individual sensors, wherein the sensors for each power plant can cover measurements for a minimal set of physical or other properties, preferably shared by all power plants (e.g. load level, ambient conditions and fuel fraction flows).

In a further aspect a respective identifier is assigned to each sensor of the at least one sensor and a respective value of the at least one sensor is encoded as a token. Accordingly, a tokenization process or approach can be utilized to combine the training data sets of the different power plants. The tokenization allows the standardization of input and output data flows. Thereby the machine learning model is able to handle different kind and number of inputs and outputs, especially a different number and type of sensors.

In a further aspect, the machine learning model is a neural network, preferably a transformer or a diffusion model. The trajectory transformer has been proven to be particularly advantageous since the transformer architecture can be trained on a huge amount of different data and thereby learn to model many different kinds of power plants in varying configurations. The machine learning model can also be an artificial intelligence model, to serve as a joint foundation model, which is configured for Joint Analysis Optimization.

In a further aspect the method further comprises
- Fine-tuning the common trained machine learning model using a fine-tuning approach based on an additional training data set from an additional power plant, wherein the fine-tuning approach utilizes preferably a Low-Rank Adaptation; and/or
- Prompt-tuning the common trained machine learning model.

Prompt-tuning for the common trained machine learning model can be utilized, where context information provided as model input is added or adapted to achieve better predictions by the model, on new or previously trained power plants.

The advantage of the Low-rank adaptation is a reduced training time. Moreover, the weights of the machine learning model can be fixated. This means that the machine learning models, where the initial weights cannot be adapted, can be fine-tuned by means of the Low-rank adaptation. The advantage of the prompt-tuning is that the machine learning model does not have to be directly adapted. Instead, the machine learning model can be optimized where the API is known, but not the weights. Moreover, prompt-tuning is faster and more cost-efficient.

In a further aspect the method further comprises
- Applying the common trained machine learning model, the fine-tuned common machine learning model or prompt-tuned common machine learning model on an input data set of an input power plant.

In a further aspect the method further comprises
- Outputting the common trained machine learning model, the fine-tuned common machine learning model, any other input and/or output data;
- Storing the common trained machine learning model, the fine-tuned common machine learning model, any other input and/or output data;
- Displaying the common trained machine learning model, the fine-tuned common machine learning model, any other input and/or output data;
- Transmitting the common trained machine learning model, the fine-tuned common machine learning model, any other input and/or output data; and/or
- Evaluating the common trained machine learning model, the fine-tuned common machine learning model, any other input and/or output data.

Accordingly, the input data, data of intermediate method steps and/or resulting output data can be further handled. The output data is in particular the common trained machine learning model. One or more actions can be performed. The action can be equally referred to as measure.

These actions can be performed by one or more technical units, such as computing units or robot units. The actions can be performed gradually or simultaneously. Actions include e.g. storing and processing steps. The advantage is that appropriate actions can be performed in a timely manner.

For example, the common trained machine learning model can be immediately outputted and/or displayed to a user by means of a display unit. The common trained machine learning model can be extended with further information, such as training data sets etc. The user can perform an evaluation or additional check based on the outputted common trained machine learning model etc. to confirm the model.

A further aspect of the invention is a computer program product directly loadable into an internal memory of a computer, comprising software code portions for performing the steps according to any one of the preceding claims when said computer program product is running on a computer.

A further aspect of the invention is a technical unit for performing the aforementioned computer-implemented method.

The technical unit may be realized as any device, or any means, for computing, in particular for executing a software, an app, or an algorithm. For example, the technical unit may comprise a central processing unit (CPU) and a memory operatively connected to the CPU. The technical unit may also comprise an array of CPUs, an array of graphical processing units (GPUs), at least one application-specific integrated circuit (ASIC), at least one field-programmable gate array, or any combination of the foregoing. The technical unit may comprise at least one module which in turn may comprise software and/or hardware. Some, or even all, modules of the technical system may be implemented by a cloud computing platform.

### 4. Short description of the drawings

In the following detailed description, presently preferred embodiments of the invention are further described with reference to the following figure:

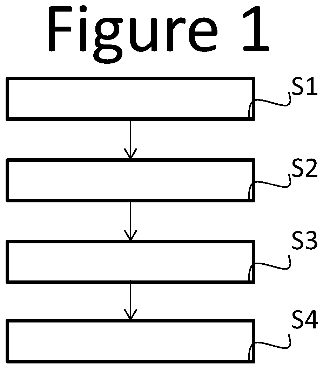

- Fig. 1: illustrates a flowchart of the computer-implemented method for determining a common trained machine learning model for a fleet of power plants according to the invention with the method steps S1 to S4.

### 5. Detailed description of preferred embodiments

Figure 1 illustrates a flowchart of the computer-implemented method for determining the common trained machine learning model for the fleet of power plants. In the first step, the plurality of training data sets for the plurality of respective power plants is provided S1. The plurality of training data sets is combined as the heterogeneous training data set. In the second step, the machine learning model is provided S2. In the next step, the machine learning model is trained on the heterogeneous training data set S3. In the last step, the common trained machine learning model is provided S4.

Training data sets and semantical grouping of the input channels.

Each power plant of the fleet of power plants can comprise one or more sensors. The sensors can be grouped into groups e.g. normative groups, such as
- Turbine description (E.g. geographical location, vendor, model series, 50/60 Hz, combustor type, operation modes)
- Environment data, e.g. ambient parameters such as pressure, temperature, humidity
- Controls (e.g. Fuel Fractions like Pilot, D-Stage, X-Stage)
- Dynamics (IFD, HFD, LFD)
- Emissions (NOx, CO)
- Load (relative, normalized, abs.)
- Context information, e.g.• Configuration information (e.g. type of burners)
- Expert knowledge or interaction parameters (e.g. dependency information)

Each group can be represented by a dedicated part within a machine learning model input and/or model output vocabulary token set.

Moreover, a data integration pipeline can be used. Training data sets from different power plants can be combined by means of the data integration pipeline. Thereby, missing features, for example if some controls are missing, can be set to value 0 or simply be omitted in the stream of model input tokens. Subsequently, a tokenization process or an embedding approach can be utilized. Therefore, an identifier (e.g. a number >0) can be defined for each sensor, such as control, ambient and emission. The values of the sensors can be encoded as tokens. The machine learning model input and output can be a concatenation of a tuple (id, tokens), wherein all relevant sensors can be considered in the model input. The tuple can be extended by a time stamp. The model output can look different than the model input, e.g. ambient values will probably not be considered in model output, since they cannot be forecasted.

Moreover, the sensor data can be represented in the international standard of units, e.g. [°C] for temperatures. Transforming actual sensor values into such units helps in making data between different power plants better comparable, and thus helps the machine learning model to generalize between different power plants. The sensors can be based on GPN-Mapping (General Purpose Naming) of power plants.

### Training

The machine learning model can be designed as a transformer or a diffusion model with regard to scalability reasons. The advantage is that transformer architectures can be trained fast on a huge amount of different data and thereby learn to model many different kinds of power plants in varying configurations as the Multihead-Attention mechanism allows them to take into account just the right parts of previously learned dependencies. The machine learning model is trained on the whole training data containing representative variations of configurations.

### Fine-tuning

Moreover, according to an embodiment, the common trained machine learning model can be used for fine-tuning. Therefore, an additional power plant can be considered, not previously trained on. In this case only limited data might be available. The Low-Rank Adaptation can be used for fine-tuning on the available data. The fine-tuning can be applied on top of the base-model weights without changing its parameters of the common trained machine learning model.

For example, a controller for controlling a power plant can then be optimized and/or evaluated using the common trained machine learning model or fine-tuned machine learning model. This way, the control of the power plant can be significantly optimized.

### Prompt-Tuning

Moreover, according to an embodiment, prompt-tuning can be utilized to improve the model's prediction. Specifically, context information in the inputs can be added (if not already known and present) or adapted (e.g. varied slightly around the values provided by expert knowledge) to improve the predictions provided by the model for a specific new or trained (power plant) unit.

## Claims

1. Computer-implemented method for determining a common trained machine learning model for a fleet of power plants, comprising the steps:
a. Providing a plurality of training data sets for a plurality of respective power plants (S1); wherein
the plurality of training data sets is combined as a heterogeneous training data set;
b. Providing a machine learning model (S2);
c. Training the machine learning model on the heterogeneous training data set (S3); and
d. Providing the common trained machine learning model (S4).

2. Computer-implemented method according to claim 1, wherein at least one power plant of the plurality of power plants is a gas turbine, wherein preferably each power plant of the plurality of gas turbines is a gas turbine.

3. Computer-implemented method according to claim 1 or claim 2, wherein each training data set of the plurality of training data sets comprises sensor data, wherein the sensor data is determined by means of at least one sensor.

4. Computer-implemented method according to claim 3, wherein a respective identifier is assigned to each sensor of the at least one sensor and a respective value of the at least one sensor is encoded as a token.

5. Computer-implemented method according to any of the preceding claims, wherein the machine learning model is a neural network, preferably a transformer or a diffusion model.

6. Computer-implemented method according to any of the preceding claims, further comprising
- Fine-tuning the common trained machine learning model using a fine-tuning approach based on an additional training data set from an additional power plant, wherein the fine-tuning approach utilizes preferably a Low-Rank Adaptation; and/or
- Prompt-tuning the common trained machine learning model.

7. Computer-implemented method according to any of the preceding claims, further comprising
- Applying the common trained machine learning model, the fine-tuned common machine learning model or prompt-tuned common machine learning model on an input data set of an input power plant.

8. Computer-implemented method according to any of the preceding claims, further comprising
- Outputting the common trained machine learning model, the fine-tuned common machine learning model, any other input and/or output data;
- Storing the common trained machine learning model, the fine-tuned common machine learning model, any other input and/or output data;
- Displaying the common trained machine learning model, the fine-tuned common machine learning model, any other input and/or output data;
- Transmitting the common trained machine learning model, the fine-tuned common machine learning model, any other input and/or output data; and/or
- Evaluating the common trained machine learning model, the fine-tuned common machine learning model, any other input and/or output data.

9. A computer program product directly loadable into an internal memory of a computer, comprising software code portions for performing the steps according to any one of the preceding claims when said computer program product is running on a computer.

10. Technical unit for performing the method according to any one of claims 1 - 8.
